# EUROPEAN PATENT APPLICATION

(11) **EP 3 438 154 A1**
(43) Date of publication of application: **06.02.2019**
(21) Application number: 17775498.3
(22) Date of filing: 30.03.2017
(51) Int. Cl.: C08G 65/10, C10M 145/24, C10M 145/26, C10N 20/04, C10N 30/02, C10N 40/02, C10N 40/04, C10N 40/06, C10N 40/25, C10N 40/30

(54) **POLYETHER COMPOUND AND PRODUCTION METHOD THEREFOR**

(30) Priority: 30.03.2016 JP 2016069744
(71) Applicant: Idemitsu Kosan Co., Ltd., Chiyoda-ku Tokyo 100-8321 (JP)
(72) Inventor: NAKANO, Taeko, Sodegaura-shi Chiba 299-0293 (JP); YOSHIDA, Yukio, Sodegaura-shi Chiba 299-0293 (JP); KISEN, Tadashi, Sodegaura-shi Chiba 299-0293 (JP); OKAMOTO, Makoto, Sodegaura-shi Chiba 299-0293 (JP)
(74) Representative: Hoffmann Eitle
(86) International application number: PCT/JP2017/013471
(87) International publication number: WO 2017/170965

(57) **Abstract**

The present invention relates to a polyether compound having a halogen atom content of 0.1000% by mass or less in terms of a polymer molecule thereof as measured by combustion ion chromatography and a weight average molecular weight (Mw) of 140,000 or more and 1,000,000 or less.

## Description

### Technical Field

The present invention relates to a polyether compound, a viscosity index improver and a lubricating oil composition each containing a polyether compound, and a production method for the polyether compound.

### Background Art

A polyether compound, such as a polyalkylene glycol compound (which may be hereinafter referred to as PAG), has been widely used as a raw material for a polyurethane product, such as an elastomer, an adhesive, and a sealant, and a functional oil agent. PAG is produced, for example, through addition polymerization of an oxirane monomer, such as ethylene oxide and propylene oxide, to an initiator having an active hydrogen atom, such as various alcohols.

The catalyst used for producing PAG is generally an alkali metal alkoxide catalyst, a composite metal cyanide complex, and the like (see, for example, PTL 1). However, in the case where these catalysts are used, an unsaturated alcohol is formed through side reaction, and the alcohol functions as an initiator, resulting in that it is generally difficult to produce PAG having a high molecular weight.

Under the circumstances, it has been investigated to increase the molecular weight of the polyether compound, such as PAG, by various methods. For example, PTL 2 describes that for providing PAG having a high molecular weight through reaction within a short period of time, an oxirane is polymerized in the presence of an alkali metal alkoxide catalyst and an aluminum organyl, and in the polymerization, a crown ether and a cryptand are not used in combination.

PTL 3 describes a method using a trialkylaluminum and an onium salt initiator, for providing a polymer containing an oxirane monomer unit having both a high molecular weight and a narrow molecular weight distribution.

### Citation List

### Patent Literatures

PTL 1: JP 3-195727 A
PTL 2: JP 2007-533783 A
PTL 3: JP 2013-57088 A

### Summary of Invention

### Technical Problem

In recent years, a polyether compound, such as PAG, is being demanded to have a higher molecular weight in various fields. For example, in the field of lubricating oils, it has been considered to use PAG as a viscosity index improver, and one having a higher molecular weight is demanded for further improving the viscosity index. However, PTL 2 describes only PAG having a molecular weight of less than 70,000, and a further enhancement of the high molecular weight is demanded for providing a high performance viscosity index improver.

In PTL 3, a high molecular weight compound having a molecular weight of approximately 100,000 is produced, but requires to use an oxirane monomer having at least one chlorine atom, and in this case, a high molecular weight compound containing a large amount of chlorine atoms in the polymer molecule is to be produced. PAG containing a chlorine atom discharged to the environment affects the ecosystem, and thus a polyether compound that has a small chlorine atom content and also has a high molecular weight is demanded.

The present invention has been made in view of the aforementioned problems, and an object of the present invention is to produce a polyether compound that has a small halogen atom content and also has a high molecular weight.

### Solution to Problem

As a result of earnest investigations made by the present inventors, it has been found that a polyether compound having a high molecular weight that has a small halogen atom content and also has a high molecular weight can be obtained by producing a polyether compound through polymerization of an oxirane monomer with an organoaluminum, such as a trialkylaluminum, and a halogen-containing onium salt, and thus the present invention shown below has been completed.
[1] A polyether compound having a halogen atom content of 0.1000% by mass or less in terms of a polymer molecule thereof as measured by combustion ion chromatography and a weight average molecular weight (Mw) of 140,000 or more and 1,000,000 or less.
[2] A viscosity index improver containing the polyether compound according to the item [1].
[3] A lubricating oil composition containing the polyether compound according to the item [1] and a lubricant base oil.
[4] A production method for a polyether compound, including polymerizing an oxirane monomer with a halogen-containing onium salt and a trialkylaluminum, to thereby produce a polyether compound having a halogen atom content of 0.1000% by mass or less in terms of a polymer molecule thereof as measured by combustion ion chromatography and a weight average molecular weight (Mw) of 140,000 or more and 1,000,000 or less.
[5] A production method for a polyether compound, including polymerizing an oxirane monomer with a halogen-containing onium salt and an organoaluminum, to thereby produce a polyether compound having a halogen atom content of 0.1000% by mass or less in terms of a polymer molecule thereof as measured by combustion ion chromatography and a weight average molecular weight (Mw) of 140,000 or more and 1,000,000 or less.
[6] A production method for a viscosity index improver, including diluting the polyether compound according to the item [1] or a polyether compound that is obtained by the production method according to the item [4] or [5], with a base oil.
[7] A production method for a lubricating oil composition, including blending the polyether compound according to the item [1] or a polyether compound that is obtained by the production method according to the item [4] or [5], with a lubricant base oil.
[8] A method for improving a viscosity index, including adding the polyether compound according to the item [1] or a polyether compound that is obtained by the production method according to the item [4] or [5], to a lubricating oil composition.
[9] A refrigerator containing the lubricating oil composition according to the item [3] charged therein.
[10] An internal combustion engine containing the lubricating oil composition according to the item [3] charged therein.
[11] An industrial apparatus containing the lubricating oil composition according to the item [3] charged therein.

### Advantageous Effects of Invention

A polyether compound that has a small halogen atom content and also has a high molecular weight can be provided.

### Description of Embodiments

Preferred embodiments of the present invention will be described in detail below.

### [Polyether Compound]

The polyether compound according to one embodiment of the present invention has a halogen atom content of 0.1000% by mass (1,000 ppm by mass) or less in terms of a polymer molecule thereof as measured by combustion ion chromatography and a weight average molecular weight (Mw) of 140,000 or more and 1,000,000 or less.

When the halogen atom content exceeds 0.1000% by mass (1,000 ppm by mass), there is a concern that the environment is adversely affected. In this point of view, the halogen atom content in the polymer molecule is preferably 0.0300% by mass (300 ppm by mass) or less, and more preferably 0.0100% by mass (100 ppm by mass) or less. In the case where no halogen atom is contained, there is a concern that the polyether having a weight average molecular weight (Mw) of 140,000 or more and 1,000,000 or less is difficult to produce. In this point of view, the halogen atom content in the polymer molecule is preferably 0.0001% by mass (1 ppm by mass) or more, more preferably 0.0010% by mass (10 ppm by mass) or more, and further preferably 0.0050% by mass (50 ppm by mass) or more.

The polyether compound is preferably a polyether compound that has a halogen atom only at the molecular end thereof. The end halogen (primary) is difficult to be eliminated as compared to a halogen inside the molecule (secondary or tertiary), and thus the concern of generation of an acid can be reduced. The concern of decomposition of the polymer with the acid can also be reduced.

The polyether compound has various characteristics due to the high molecular weight thereof. For example, the polyether compound having a high molecular weight that is blended with a lubricating oil composition can improve the viscosity index of the lubricating oil composition.

The polyether compound has a weight average molecular weight (Mw) of 140,000 or more, preferably 160,000 or more, more preferably 180,000 or more, and further preferably 300,000 or more. The polyether compound that has the extremely high molecular weight readily exhibits the various characteristics derived from the high molecular weight thereof. For example, the polyether compound that is used as the viscosity index improver as described above can further enhance the viscosity index of the lubricating oil composition.

When the weight average molecular weight (Mw) of the polyether compound exceeds 1,000,000, there may be difficulty in production and handleability thereof. From the standpoint of the production and the handleability, the weight average molecular weight (Mw) of the polyether compound is preferably 800,000 or less, more preferably 750,000 or less, and further preferably 700,000 or less.

The polyether compound preferably has a number average molecular weight (Mn) of 14,000 or more, more preferably 45,000 or more, further preferably 70,000 or more, and still further preferably 150,000 or more, and is preferably 500,000 or less, more preferably 400,000 or less, and further preferably 300,000 or less.

The polyether compound preferably has a molecular weight distribution (Mw/Mn), which is expressed by the ratio of the weight average molecular weight (Mw) and the number average molecular weight (Mn) thereof, of 10.0 or less, more preferably 5.0 or less, further preferably 3.0 or less, still further preferably 2.5 or less, and still more further preferably 2.0 or less.

The halogen atom content, the molecular weights, and the molecular weight distribution in the polymer molecule can be measured by the method described in the examples later.

The polyether compound is preferably a polyether compound represented by the following general formula (1).

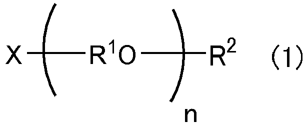

In the general formula (1), X represents a halogen atom; R¹O represents a constitutional unit derived from the oxirane monomer; and R² represents a hydrogen atom, a hydrocarbon group having a number of carbon atoms of 1 or more and 10 or less, or an oxygen-containing hydrocarbon group having a number of carbon atoms of 1 or more and 10 or less.

n represents such an integer that the polyether compound has a weight average molecular weight (Mw) of 140,000 or more and 1,000,000 or less.

The plural R^{1'}s may be the same as or different from each other.

A polyether compound having the molecular structure represented by the general formula (1) has been difficult to be a polymer having a weight average molecular weight (Mw) of 140,000 or more, but can be produced by a production method according to one embodiment of the present invention described later.

In the general formula (1), examples of the halogen atom represented by X include at least one halogen atom selected from the group consisting of a fluorine atom, a chlorine atom, a bromine atom, and an iodine atom, and the halogen atom is preferably a chlorine atom or a bromine atom, and more preferably a chlorine atom.

R¹O represents a constitutional unit derived from the oxirane monomer, in which preferred examples of R¹ include a divalent hydrocarbon group having a number of carbon atoms of 2 or more and 27 or less and a divalent hydrocarbon group having a number of carbon atoms of 2 or more and 27 or less having an oxygen atom. The plural R^{1'}s may be the same as or different from each other, and are preferably the same as each other.

<Oxirane Monomer>

The oxirane monomer is a compound having a heterocyclic 3-membered ring formed of two carbon atoms and one oxygen atom (which may be hereinafter referred to as a "3-membered cyclic ether structure"). Preferred examples of the oxirane monomer include an oxirane monomer having no halogen atom in the molecule thereof. In the case where the oxirane monomer has no halogen atom, the polyether compound has a halogen atom only at the molecular end thereof.

Examples of the oxirane monomer include ethylene oxide, an alkylene oxide having a chain or branched alkyl group, an alkylene oxide having a chain or branched alkenyl group, an alicyclic epoxide, an alkyl glycidyl ether, and an aromatic epoxide.

The alkylene oxide having a chain or branched alkyl group is not particularly limited, as far as the alkyl group is bonded to the carbon atom of the 3-membered cyclic ether structure, and examples thereof include an alkylene oxide having a chain or branched alkyl group having a number of carbon atoms of 3 or more and 27 or less, such as propylene oxide, 1,2-epoxybutane, 1,2-epoxyisobutane, 2,3-epoxybutane, 1,2-epoxypentane, 1,2-epoxyhexane, 1,2-epoxyheptane, 1,2-epoxyoctane, 1,2-epoxynonane, 1,2-epoxydecane, 1,2-epoxyundecane, 1,2-epoxydodecane, 1,2-epoxytridecane, 1,2-epoxytetradecane, 1,2-epoxypentadecane, 1,2-epoxyhexadecane, 1,2-epoxyheptadecane, 1,2-epoxyoctadecane, 1,2-epoxynonadecane, 1,2-epoxyicosane, 1,2-epoxyhenicosane, 1,2-epoxydocosane, 1,2-epoxytricosane, 1,2-epoxytetracosane, and 1,2-epoxypentacosane.

The alkylene oxide having a chain or branched alkenyl group is not particularly limited, as far as the alkenyl group is bonded to the carbon atom of the 3-membered cyclic ether structure, and examples thereof include 2-vinyloxirane, 2-allyloxirane, 2-isopropenyloxirane, 2-(3-butenyloxirane), 2-(5-hexenyloxirane), and 2-(7-octenyloxirane).

An alkylene oxide having a chain or branched alkyl group and a chain or branched alkenyl group may also be used, and examples thereof include 2-methyl-2-isopropenyloxirane and 2-methyl-2-allyloxirane.

Examples of the alicyclic epoxide include a compound having a cycloalkyl group bonded to a carbon atom of a 3-membered cyclic ether structure, and examples thereof include an alicyclic epoxide having a number of carbon atoms of 5 or more and 12 or less, such as 1,2-epoxycyclopentane, 1,2-epoxycyclohexane, 1,2-epoxycycloheptane, 1,2-epoxycyclooctane, 1,2-epoxycyclononane, 1,2-epoxycyclodecane, 1,2-epoxycycloundecane, and 1,2-epoxycyclododecane.

Examples of the alkyl glycidyl ether include methyl glycidyl ether, ethyl glycidyl ether, and butyl glycidyl ether, and examples of the aromatic epoxide include styrene oxide and phenyl glycidyl ether.

Among the compounds described above, ethylene oxide and an alkylene oxide having a chain or branched alkyl group are preferred, and ethylene oxide and an alkylene oxide having a chain alkyl group are more preferred. The alkylene oxide having a chain or branched alkyl group preferably has a number of carbon atoms of 3 or more and 12 or less, and more preferably a number of carbon atoms of 3 or more and 4 or less.

Among the compounds described above, ethylene oxide, propylene oxide, 1,2-epoxybutane, 1,2-epoxyisobutane, and 2,3-epoxybutane are preferred; ethylene oxide, propylene oxide, and 1,2-epoxybutane are more preferred; ethylene oxide and propylene oxide are further preferred; and propylene oxide is still further preferred.

When the constitutional unit derived from the oxirane monomer represented by R¹O is a constitutional unit derived from the aforementioned various alkylene oxides in the general formula (1), the polyether compound has a halogen atom only at the end structure thereof, and can be favorably used in various fields. For example, in the field of lubricating oils, the polyether compound can be favorably used as a viscosity index improver.

The oxirane monomer is preferably ethylene oxide or an alkylene oxide having a chain alkyl group as described above. Accordingly, in the general formula (1), R¹O preferably has a structure represented by -CR¹¹₂CR¹²₂O-(wherein R¹¹ and R¹² each independently represent a hydrogen atom or a chain alkyl group) and is preferably a divalent group having a total number of carbon atoms of 2 or more and 27 or less, and the total number of carbon atoms is more preferably 2 or more and 20 or less, further preferably 2 or more and 12 or less, and still further preferably 2 or more and 4 or less.

Further preferred examples of R¹O include -CH₂CH₂O-, -CH₂CH(CH₃)O-, -CH₂CH(CH₂CH₃)O-, -CH₂C(CH₃)₂O-, and -CH(CH₃)CH(CH₃)O-. Among these, -CH₂CH₂O-, -CH₂CH(CH₃)O-, and -CH₂CH(CH₂CH₃)O- can be exemplified. With the total number of carbon atoms of R¹O of 2 or more and 4 or less, the polyether compound can be favorably used in various fields, and for example, in the field of lubricating oils, the polyether compound can be favorably used as a viscosity index improver, as described above.

The oxirane monomer may be an oxirane monomer having a halogen atom, as far as the aforementioned halogen atom content in the polymer is satisfied.

The oxirane monomer having a halogen atom is not particularly limited, as far as the oxirane monomer is a compound containing at least one halogen atom selected from the group consisting of a fluorine atom, a chlorine atom, a bromine atom, and an iodine atom, and a 3-membered cyclic ether structure, and examples thereof include an epihalohydrin, such as epifluorohydrin, epichlorohydrin, epibromohydrin, epiiodohydrin, and β-methylepichlorohydrin; p-chlorostyrene oxide, dibromophenyl glycidyl ether, tetrafluoroethylene oxide, hexafluoropropylene oxide, and perfluorophenyl glycidyl ether. Among these, an epihalohydrin is preferred, and epichlorohydrin is more preferred.

While the constitutional unit derived from the oxirane monomer may be contained solely in the molecular structure of the polyether compound represented by the general formula (1), and two or more kinds thereof may be contained therein, it is preferred that the constitutional unit is contained solely in the molecular structure of the polyether compound represented by the general formula (1).

The hydrocarbon group having a number of carbon atoms of 1 or more and 10 or less in R² may be any of linear-chain, branched-chain, and cyclic. The hydrocarbon group is preferably an alkyl group, and examples thereof include a methyl group, an ethyl group, a n-propyl group, an isopropyl group, branched or linear butyl groups, branched or linear pentyl groups, branched or linear hexyl groups, branched or linear heptyl groups, branched or linear octyl groups, branched or linear nonyl groups, branched or linear decyl groups, a cyclopentyl group, and a cyclohexyl group.

Examples of the oxygen-containing hydrocarbon group having a number of carbon atoms of 1 or more and 10 or less in R² include an acyl group having a number of carbon atoms of 2 or more and 10 or less, a chain aliphatic group having an ether bond, and a cyclic aliphatic group having an ether bond (such as a tetrahydrofurfuryl group). The hydrocarbon moiety of the acyl group having a number of carbon atoms of 2 or more and 10 or less may be any of linear-chain, branched-chain, and cyclic. The hydrocarbon moiety of the acyl group is preferably an alkyl group, and examples thereof include the aforementioned alkyl groups having a number of carbon atoms of 1 or more and 9 or less that can be selected as R².

Among the groups described above, R² is preferably a hydrogen atom or an alkyl group, more preferably a hydrogen atom or an alkyl group having a number of carbon atoms of 1 or more and 4 or less, further preferably a hydrogen atom or a methyl group, and still further preferably a hydrogen atom.

n represents such an integer that the polyether compound has a weight average molecular weight (Mw) of 140,000 or more and 1,000,000 or less, preferably such an integer that the polyether compound has a weight average molecular weight (Mw) of 160,000 or more, more preferably 180,000 or more, and further preferably 300,000 or more, and preferably such an integer that the polyether compound has a weight average molecular weight of 800,000 or less, more preferably 750,000 or less, and further preferably 700,000 or less.

For making the weight average molecular weight, n is preferably an integer of 2,500 or more, more preferably 2,700 or more, further preferably 3,000 or more, and still further preferably 5,000 or more, and is preferably an integer of 15,000 or less, more preferably 14,000 or less, further preferably 13,000 or less, and still further preferably 12,000 or less.

The polyether compound is preferably a polyether compound represented by the following general formula (2).

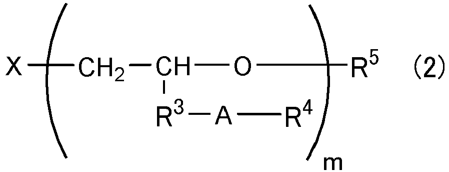

In the general formula (2), X represents a halogen atom; R³ represents a single bond or a methylene group; R⁴ represents a hydrogen atom, a chlorine atom, or an alkyl group having a number of carbon atoms of 1 or more and 24 or less; R⁵ represents a hydrogen atom, a hydrocarbon group having a number of carbon atoms of 1 or more and 10 or less, or an oxygen-containing hydrocarbon group having a number of carbon atoms of 1 or more and 10 or less; A represents a single bond or an oxygen atom; and m represents such an integer that the polyether compound has a weight average molecular weight (Mw) of 140,000 or more and 1,000,000 or less.

The plural R^{3'}s may be the same as or different from each other, the plural R^{4'}s may be the same as or different from each other, and the plural A's may be the same as or different from each other.

In the general formula (2), examples of the halogen atom represented by X include at least one halogen atom selected from the group consisting of a fluorine atom, a chlorine atom, a bromine atom, and an iodine atom, and the halogen atom is preferably a chlorine atom or a bromine atom, and more preferably a chlorine atom.

R³ is preferably a single bond.

R⁴ is preferably a hydrogen atom or the aforementioned alkyl group having a number of carbon atoms of 1 or more and 24 or less. The number of carbon atoms of the alkyl group is preferably a number of carbon atoms of 1 or more and 15 or less, more preferably a number of carbon atoms of 1 or more and 5 or less, and further preferably a number of carbon atoms of 1 or more and 3 or less. The alkyl group may be any of linear-chain, branched, and cyclic, and is preferably a linear-chain.

Examples of the alkyl group having a number of carbon atoms of 1 or more and 24 or less include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a henicosyl group, a docosyl group, a tricosyl group, a tetracosyl group, an isopropyl group, an isobutyl group, a sec-butyl group, a tert-butyl group, an isopentyl group, a neopentyl group, a tert-pentyl group, a methylpentyl group, an isohexyl group, a pentylhexyl group, a butylpentyl group, a 2-ethylhexyl group, a cyclopropyl group, a cyclobutyl group, a cyclopentyl group, and a cyclohexyl group. Among these, a hydrogen atom, a methyl group, an ethyl group, and a propyl group are preferred, a hydrogen atom and a methyl group are more preferred, and a methyl group is further preferred.

A is preferably a single bond. There are plural A's, which may be the same as or different from each other.

The case where both R³ and A represent single bonds means that R⁴ is directly bonded to the carbon atom in the main chain of the polyether compound represented by the general formula (2).

The plural R^{3'}s may be the same as or different from each other, the plural R^{4'}s may be the same as or different from each other, and the plural A's may be the same as or different from each other.

In the general formula (2), it is preferred that the plural R^{3'}s are the same as each other, the plural R^{4'}s are the same as each other, and the plural A's are the same as each other.

R⁵ is the same as R² in the general formula (1) described above, and the preferred embodiments thereof are also the same.

m is the same as n in the general formula (1) described above, and the preferred embodiments thereof are also the same.

### [Production Method for Polyether Compound]

The production method for a polyether compound according to one embodiment of the present invention is a production method for a polyether compound, including polymerizing an oxirane monomer with a halogen-containing onium salt and an organoaluminum such as trialkylaluminum, to thereby produce a polyether compound having a halogen atom content of 0.1000% by mass or less in terms of a polymer molecule thereof as measured by combustion ion chromatography and a weight average molecular weight (Mw) of 140,000 or more and 1,000,000 or less.

### <Halogen-containing Onium Salt>

The halogen-containing onium salt used in the production method for a polyether compound according to one embodiment of the present invention is a salt having a halogen atom in an onium salt. The halogen-containing onium salt functions as a polymerization initiator in the polymerization reaction in the production method. In the production method, the onium salt as a polymerization initiator has a halogen atom, and thus the resulting polyether compound has a halogen atom at the polymerization initiation end.

Examples of the halogen-containing onium salt include an ammonium salt, and preferred examples thereof include a compound represented by the following general formula (3).

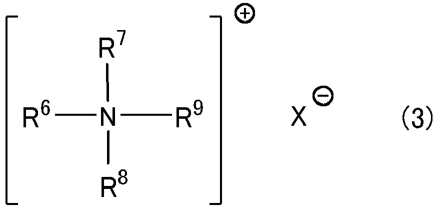

In the general formula (3), X represents a halogen atom; and R⁶ to R⁹ each independently represent an alkyl group having a number of carbon atoms of 1 or more and 8 or less.

In the general formula (3), examples of the halogen atom represented by X include at least one halogen atom selected from the group consisting of a fluorine atom, a chlorine atom, a bromine atom, and an iodine atom, and the halogen atom is preferably a chlorine atom or a bromine atom, and more preferably a chlorine atom.

The alkyl groups each having a number of carbon atoms of 1 or more and 8 or less represented by R⁶ to R⁹ each independently more preferably has a number of carbon atoms of 1 or more and 5 or less, and further preferably a number of carbon atoms of 1 or more and 4 or less. The alkyl group may be any of linear -chain, branched, and cyclic, and is preferably linear-chain.

Examples of the alkyl group having a number of carbon atoms of 1 or more and 8 or less include a methyl group, an ethyl group, a propyl group, a butyl group, a pentyl group, a hexyl group, a heptyl group, an octyl group, an isopropyl group, an isobutyl group, a sec-butyl group, a tert-butyl group, an isopentyl group, a neopentyl group, a tert-pentyl group, a methylpentyl group, an isohexyl group, and a 2-ethylhexyl group. Among these, a methyl group, an ethyl group, a propyl group, a butyl group, and an octyl group are preferred, and a methyl group, an ethyl group, a propyl group, and a butyl group are more preferred.

In the general formula (3), it is preferable that the plural R⁶ to R⁹ are the same as each other.

Specific examples of the halogen-containing onium salt include tetramethylammonium chloride, tetramethylammonium bromide, tetrabutylammonium chloride, tetrabutylammonium bromide, tetraoctylammonium chloride, and tetraoctylammonium bromide, and the halogen-containing onium salt is preferably at least one selected from the group consisting of the aforementioned examples, more preferably at least one selected from the group consisting of tetrabutylammonium bromide, tetraoctylammonium chloride, tetraoctylammonium bromide, and tetrabutylammonium chloride, and further preferably tetrabutylammonium chloride or tetrabutylammonium bromide.

The amount of the halogen-containing onium salt used may be changed depending on the target molecular weight, and is preferably 0.0002% by mass (2 ppm by mass) or more and 1.0000% by mass (10,000 ppm by mass) or less, more preferably 0.0010% by mass (10 ppm by mass) or more and 0.5000% by mass (5,000 ppm by mass) or less, further preferably 0.0020% by mass (20 ppm by mass) or more and 0.2000% by mass (2,000 ppm by mass) or less, and still further preferably 0.0040% by mass (40 ppm by mass) or more and 0.1500% by mass (1,500 ppm by mass) or less, based on the total amount of the total monomers and the halogen-containing onium salt in the reaction system. When the amount of the halogen-containing onium salt used is the lower limit or more, the polymerization reaction can be appropriately performed with the halogen-containing onium salt as an initiator. When the amount thereof is the upper limit or less, the resulting polyether compound can have a sufficiently high molecular weight.

### <Organoaluminum>

The organoaluminum used in the production method for a polyether compound according to one embodiment of the present invention is preferably a trialkylaluminum, more preferably a trialkylaluminum having alkyl groups having a number of carbon atoms of 1 or more and 18 or less, further preferably a trialkylaluminum having alkyl groups having a number of carbon atoms of 1 or more and 8 or less, and still further preferably a trialkylaluminum having alkyl groups having a number of carbon atoms of 2 or more and 6 or less.

The alkyl groups contained in the trialkylaluminum each may be branched or linear-chain. The alkyl groups contained in one molecule may be the same as or different from each other.

Preferred examples of the trialkylaluminum include trimethylaluminum, triethylaluminum, tri-n-butylaluminum, and triisobutylaluminum, and more preferred examples thereof include triisobutylaluminum.

The organoaluminum may be used solely, may be used as a combination of two kinds thereof, or may be used as a combination of two or more kinds thereof. The organoaluminum used may be diluted with a solvent, such as hexane and toluene.

The trialkylaluminum may be used solely, may be used as a combination of two kinds thereof, or may be used as a combination of two or more kinds thereof. The trialkylaluminum used may be diluted with a solvent, such as hexane and toluene.

The amount of the organoaluminum used in terms of ratio with respect to the halogen-containing onium salt (organoaluminum/halogen-containing onium salt) is preferably 1 or more and 100 or less, more preferably 5 or more and 50 or less, and further preferably 11 or more and 40 or less.

When the amount of the organoaluminum used is in the range, a polyether compound having a higher molecular weight can be produced.

The amount of the trialkylaluminum used in terms of ratio with respect to the halogen-containing onium salt (trialkylaluminum/halogen-containing onium salt) is preferably 1 or more and 100 or less, more preferably 5 or more and 50 or less, and further preferably 11 or more and 40 or less.

When the amount of the trialkylaluminum used is in the range, a polyether compound having a higher molecular weight can be produced.

### <Oxirane Monomer>

Examples of the oxirane monomer used in the production method for a polyether compound according to one embodiment of the present invention include the same ones as described for the aforementioned polyether compound according to one embodiment of the present invention, and the preferred embodiments thereof are also the same.

The oxirane monomer may be used solely or as a combination of two or more kinds thereof.

The synthesis of the polyether compound be performed through ring-opening polymerization of the oxirane monomer in the presence of the halogen-containing onium salt and the organoaluminum (preferably the trialkylaluminum). The polymerization reaction is generally performed by mixing the raw materials in the reaction system. The mixing of the raw materials be performed, for example, by adding the oxirane monomer to the organoaluminum (preferably the trialkylaluminum) having been charged in the reaction system in advance, and then adding the halogen-containing onium salt dissolved in the oxirane monomer thereto.

The mixing of the raw materials may also be performed by adding the oxirane monomer to a mixture of the organoaluminum (preferably the trialkylaluminum) and the halogen-containing onium salt having been charged in the reaction system in advance, or by adding the organoaluminum (preferably the trialkylaluminum) to a mixture of the halogen-containing onium salt and the oxirane monomer having been charged in the reaction system in advance.

### <Solvent used in Production of Polyether Compound>

The polymerization reaction is preferably performed in the presence of a solvent while not particularly limiting. By performing the polymerization reaction in the presence of a solvent, the polymerization can be readily controlled, and the polyether compound having a high molecular weight can be readily produced.

The solvent is not particularly limited, as far as the solvent is inert to the raw materials, and examples thereof include a saturated hydrocarbon solvent, such as a chain saturated hydrocarbon solvent, e.g., n-pentane, n-hexane, n-heptane, and n-octane; a branched-chain saturated hydrocarbon solvent, e.g., isooctane; and an alicyclic saturated hydrocarbon solvent, e.g., cyclopentane and cyclohexane; an aromatic hydrocarbon solvent, such as benzene and toluene; and an ether solvent, such as a monoether, a diether, a triether, a tetraether, a polyvinyl ether, and a polyalkylene glycol compound.

Among these, a saturated hydrocarbon solvent is preferably used from the standpoint of readily producing the polyether compound having a higher molecular weight.

These compounds may be used solely or as a combination of two or more kinds thereof.

The "solvent" herein means a solvent that is added to the reaction system for synthesizing the polyether compound through polymerization of the oxirane monomer. For example, the solvent that is contained in advance in an additive other than the oxirane monomer, such as a polymerization initiator and a catalyst, the solvent that contains the additive from the standpoint of the handleability of the additive, and the like are not encompassed in the "solvent" herein.

Examples of the monoether include a dialkyl ether having alkyl groups having a number of carbon atoms of 1 or more and 12 or less. The diether used may be a dialkyl diether having alkyl groups having a number of carbon atoms of 1 or more and 12 or less, and examples thereof include a dialkyl ether of an alkanediol, such as ethylene glycol, propylene glycol, 1,3-propanediol, 1,4-butanediol, and neopentyl glycol. Examples of the triether and the tetraether include an alkyl ether of a trihydric or tetrahydric alcohol, such as glycerin, trimethylolethane, trimethylolpropane, and pentaerythritol.

These compounds may be used solely or as a combination of two or more kinds thereof.

The solvent is preferably added to the reaction system to make a molar amount of the monomer per 1 L of the solvent of 0.10 mol/L or more and 10.00 mol/L or less, more preferably 1.00 mol/L or more and 8.00 mol/L or less, and further preferably 1.00 mol/L or more and 4.00 mol/L or less. When the molar amount of the monomer per 1 L of the solvent is the upper limit or less, the polyether compound having a high molecular weight can be readily produced. When the molar amount of the monomer per 1 L of the solvent is the lower limit or more, the size of the reaction vessel can be prevented from becoming unnecessarily large.

The condition for the polymerization reaction performed is not particularly limited, and may be appropriately determined depending on the kinds of the raw materials used, the target molecular weight, and the like. The pressure in the polymerization reaction is generally the atmospheric pressure. The temperature in the polymerization reaction is preferably -30°C or more and 30°C or less, more preferably -20°C or more and 10°C or less, and further preferably -15°C or more and 0°C or less. The polymerization time is preferably 0.5 hour or more and 24 hours or less, more preferably 1 hour or more and 15 hours or less, and further preferably 2 hours or more and 10 hours or less.

The polymerization reaction may be terminated, for example, by adding water, an alcohol, an acidic substance, a mixture thereof, or the like thereto, so as to deactivate the catalyst. After completing the polymerization reaction, the polyether compound may be recovered by removing the impurities and the volatile components by an ordinary method, such as filtration and distillation under reduced pressure.

The end of the resulting polyether compound is a hydroxy group, and a functional group may be introduced to the end hydroxy group with a modifier. For example, at the end of the polyether compound, the hydroxy group may be esterified or etherified to introduce a hydrocarbon group having a number of carbon atoms of 1 or more and 10 or less or an oxygen-containing hydrocarbon group having a number of carbon atoms of 1 or more and 10 or less. While examples of the hydrocarbon group include an alkyl group, and examples of the oxygen-containing hydrocarbon group include an acyl group, the details of the hydrocarbon group and the oxygen-containing hydrocarbon group are the same as in R² in the general formula (1), and the preferred embodiments thereof are also the same.

In the production method for a polyether compound according to one embodiment of the present invention, a polyether compound having a high molecular weight can be obtained. Specifically, a polyether compound having a weight average molecular weight (Mw) of 140,000 or more can be produced. When the molecular weight (Mw) is 140,000 or more, the polyether compound can be useful in various fields, and for example, in the field of lubricating oils, the polyether compound can be usefully used as a viscosity index improver for improving the viscosity index.

The preferred ranges of the halogen atom content, the weight average molecular weight (Mw), the number average molecular weight (Mn), and the molecular weight distribution (Mw/Mn) of the polyether compound that is obtained by the production method for a polyether compound according to one embodiment of the present invention are the same as the values and the preferred ranges thereof described for the aforementioned polyether compound according to one embodiment of the present invention.

### [Lubricating Oil Composition]

The lubricating oil composition according to one embodiment of the present invention contains a lubricant base oil and the polyether compound. The lubricating oil composition has an improved viscosity index due to the polyether compound having a high molecular weight contained therein.

In the lubricating oil composition, the polyether compound is contained in an amount of generally 0.01% by mass or more and 50% by mass or less, preferably 0.1% by mass or more and 30% by mass or less, and more preferably 0.1% by mass or more and 15% by mass or less.

While the lubricant base oil is not particularly limited and may be a base oil that has been generally used in a lubricating oil, examples thereof include a mineral oil, a synthetic oil, and a mixture thereof, and among these, an oxygen-containing oil is preferred. Examples of the oxygen-containing oil include an aliphatic monoester, an aliphatic diester, an aliphatic triester, a polyol ester (POE), an aliphatic monoether, an aliphatic diether, an aliphatic triether, an aliphatic tetraether, and an aliphatic polyvinyl ether (PVE).

The lubricant base oil generally has a kinetic viscosity at 100°C in a range of 0.5 mm²/s or more and 50 mm²/s or less, and preferably in a range of 1 mm²/s or more and 25 mm²/s or less, while not particularly limiting. The kinetic viscosity herein is measured with a glass capillary viscometer according to JIS K2283-2000.

The lubricating oil composition may contain additives, such as an antioxidant, an oily agent, an extreme pressure agent, a detergent dispersant, a viscosity index improver other than the aforementioned polyether compound, a rust inhibitor, a metal deactivator, and an anti-foaming agent, in such a range that does not impair the effect of the polyether compound. The additives may be used solely or as a combination of two or more kinds thereof.

The lubricating oil composition may be formed only of the lubricant base oil and the polyether compound without blending an additive other than the polyether compound depending on purposes. The lubricating oil composition may also be formed of the lubricant base oil, the polyether compound, and at least one selected from the group consisting of the aforementioned additives.

The lubricating oil composition is preferably used as a refrigerator oil. Specifically, the lubricating oil composition may be used by charging in an interior of a refrigerator along with a refrigerant, and used, for example, for lubricating a sliding portion of a compressor or the like provided in the refrigerator.

In addition to the refrigerator, the lubricating oil composition may also be used in an internal-combustion engine, such as a gasoline engine and a diesel engine, a transmission system, a shock absorber, various gear systems, various bearing systems, other various industrial apparatuses, and the like.

As described in the foregoing, one embodiment of the present invention relates to a refrigerator containing the lubricating oil composition charged therein.

One embodiment of the present invention relates to an internal combustion engine containing the lubricating oil composition charged therein, and examples of the internal combustion engine include a gasoline engine and/or a diesel engine.

One embodiment of the present invention relates to an industrial apparatus containing the lubricating oil composition charged therein. Examples of the industrial apparatus include at least one selected from the group consisting of a transmission system, a shock absorber, various gear systems, and various bearing systems.

The lubricating oil composition may be produced by blending the polyether compound and the various additives that are used depending on necessity with the lubricant base oil.

Accordingly, the production method for a lubricating oil composition according to one embodiment of the present invention is a production method including blending the polyether compound with a lubricant base oil, and preferably a production method including blending the polyether compound that is obtained by the aforementioned production method, with a lubricant base oil. As described above, the lubricating oil composition that is obtained by the production method is preferably a refrigerator oil composition used in a refrigerator.

### [Viscosity Index Improver]

The polyether compound is preferably used as an additive for improving a viscosity index of a lubricating oil composition, and more preferably used as a viscosity index improver for a refrigerator oil, as described above.

Accordingly, one embodiment of the present invention relates to a method for improving a viscosity index, including adding the polyether compound to a lubricating oil composition, and preferably adding the polyether compound that is obtained by the production method, to a lubricating oil composition, so as to improve the viscosity index.

The viscosity index improver may be formed only of the polyether compound, and may contain another component in addition to the polyether compound. For example, the viscosity index improver may contain a base oil or the like for diluting the polyether compound in addition to the polyether compound. The base oil used may be the various base oils described above for the lubricant base oil.

Accordingly, the production method for a viscosity index improver according to one embodiment of the present invention is a production method including diluting the polyether compound with a base oil, and preferably a production method including diluting the polyether compound that is obtained by the production method, with a base oil. As described above, the viscosity index improver that is obtained by the production method is preferably used in a lubricating oil composition and more preferably used in a refrigerator oil composition.

The polyether compound can be used in various purposes other than the purpose of a lubricating oil, and can be used as a raw material for a polymer material, such as urethane, constituting an elastomer, a resin, rubber, and the like. The urethane may be used, for example, as a sealant, an adhesive, and the like.

### Examples

The present invention will be described more specifically with reference to examples below, but the present invention is not limited to the examples.

The measurement of the properties was performed according to the following procedures.

### [Weight Average Molecular Weight (Mw), Number Average Molecular Weight (Mn), and Molecular Weight Distribution (Mw/Mn)]

The weight average molecular weight (Mw) and the number average molecular weight (Mn) were measured with gel permeation chromatography (GPC). In the GPC, the measurement was performed by using two columns of TSKgel Super Multipore HZ-M, produced by Tosoh Corporation, connected to each other, and tetrahydrofuran as an eluent with a refractive index detector as a detector, and the weight average molecular weight (Mw) and the number average molecular weight (Mn) were obtained with the standard polystyrene.

The molecular weight distribution (Mw/Mn) was calculated by using the resulting values of the weight average molecular weight (Mw) and the number average molecular weight (Mn).

### [Measurement of Halogen Atom (Chlorine Atom) Content in Polymer Molecule]

The content of a halogen atom (chlorine atom) in the polymer synthesized in Examples and Comparative Example was measured by a combustion ion chromatography method with the following apparatus and under the following condition.

### (1) Combustion of Specimen

Equipment: "AQF-100", a product name, produced by Mitsubishi Chemical Analytech Co., Ltd.

### Combustion condition:

Set temperature of combustion furnace: 800°C for former stage and 1,000°C for later stage

### Gas flow rate:

Oxygen: 400 mL/min from outer tube of combustion tube
Argon or oxygen: 200 mL/min from inner tube of combustion tube
Fed amount of ultrapure water for moisturizing: 0.1 mL/min

### (2) Ion Chromatography

Equipment: "DX-120", a product name, produced by Thermo Fisher Scientific, Inc.
Column: "Dionex (trade name) IonPac (trade name) AG12A" and "Dionex (trade name) IonPac (trade name) AS12A", all produced by Thermo Fisher Scientific, Inc.

### [Example 1]

In a 1 L separable flask, 500 mL of n-heptane as a solvent, 8.3 mL of a triisobutylaluminum 1.0 M toluene solution as a polymerization catalyst, and 90 mL of propylene oxide as a monomer were charged. After cooling the reaction system to -15°C, 10 mL of propylene oxide and 0.077 g of tetrabutylammonium chloride as a polymerization initiator charged in a dropping funnel were added dropwise to the reaction system. After completing the dropwise addition, the reaction system was stirred for 4 hours, and 20 mL of ethanol and 2 mL of a 5% sodium hydrogen carbonate aqueous solution were added thereto to terminate the polymerization reaction.

20 g of "Celite" (a trade name, produced by Imerys Minerals California, Inc.) was added to the resulting crude product, which was filtered under pressure, and then the volatile component was distilled off at 120°C under reduced pressure, so as to provide a polyether compound 1.

The resulting polyether compound 1 had a weight average molecular weight (Mw) of 480,000 and a molecular weight distribution (Mw/Mn) of 1.7. The chlorine atom content in the polymer was 0.0120% by mass (120 ppm by mass).

### [Example 2]

A polyether compound 2 was obtained in the same manner as in Example 1 except that the amount of tetrabutylammonium chloride charged was changed to 0.11 g.

The resulting polyether compound 2 had a weight average molecular weight (Mw) of 250,000 and a molecular weight distribution (Mw/Mn) of 2.3. The chlorine atom content in the polymer was 0.0170% by mass (170 ppm by mass).

### [Example 3]

A polyether compound 3 was obtained in the same manner as in Example 1 except that the solvent was changed to toluene.

The resulting polyether compound 3 had a weight average molecular weight (Mw) of 140,000 and a molecular weight distribution (Mw/Mn) of 2.4. The chlorine atom content in the polymer was 0.0210% by mass (210 ppm by mass).

### [Comparative Example 1]

In a 1 L separable flask, 0.05 g of sodium hydride and 2.34 mL of cyclohexane were charged, to which 0.08 mL of isopropanol was added, so as to synthesize sodium isopropoxide as a polymerization initiator. 200 mL of cyclohexane as a solvent and 90 mL of propylene oxide as a monomer were charged thereto. After cooling the reaction system to -15°C, 25 mL of a triisobutylaluminum 1.0 M toluene solution was added dropwise thereto. After completing the dropwise addition, the reaction system was stirred for 4 hours, and 20 mL of ethanol and 2 mL of a 5% sodium hydrogen carbonate aqueous solution were added thereto to terminate the polymerization reaction.

The resulting crude product was filtered under pressure, and then the volatile component was distilled off at 120°C under reduced pressure, so as to provide a polyether compound 4.

The resulting polyether compound 4 had a weight average molecular weight (Mw) of 59,000 and a molecular weight distribution (Mw/Mn) of 3.0. The chlorine atom content in the polymer was 0.0000% by mass (0 ppm by mass).

**Table 1**

| | Oxirane monomer | | Halogen-containing onium salt | | | Organoaluminum | | Molar amount of oxirane monomer per 1 L of solvent | Polyether compound | | | |
|---|---|---|---|---|---|---|---|---|---|---|---|---|
| | | | | | | | | | Halogen atom content | Mw (× 10⁴) | Mn (× 10⁴) | Mw/Mn |
| | mL | mol | g | mmol | % by mass *1 | mmol | molar ratio *2 | mol/L | % by mass *3 | - | - | - |
| Example 1 | 100 | 1.43 | 0.077 | 0.277 | 0.092 | 8.29 | 30 | 2.86 | 0.0120 | 48.0 | 28.0 | 1.7 |
| Example 2 | 100 | 1.43 | 0.110 | 0.394 | 0.132 | 8.29 | 21 | 2.86 | 0.0170 | 25.0 | 11.0 | 2.3 |
| Example 3 | 100 | 1.43 | 0.077 | 0.277 | 0.092 | 8.29 | 30 | 2.86 | 0.0210 | 14.0 | 5.8 | 2.4 |
| Comparative Example 1 *4 | 90 | 1.28 | 0.087 | 1.057 | 0.116 | 25.5 | 24 | 6.40 | 0.0000 | 5.9 | 2.0 | 3.0 |

| | | | | | | | | | | | | |
|---|---|---|---|---|---|---|---|---|---|---|---|---|
| *1: The percentage by mass based on the total amount of the oxirane monomer and the halogen-containing onium salt is shown. *2: The molar ratio of organoaluminum is a molar ratio with respect to the halogen-containing onium salt or sodium isopropoxide. *3: The halogen atom content is the chlorine atom content in the polymer molecule. *4: Sodium isopropoxide is used instead of the halogen-containing onium salt. | | | | | | | | | | | | |

As described above, in Examples 1 to 3, a polyether compound having a high molecular weight was produced by performing the polymerization reaction in the presence of the trialkylaluminum as the organoaluminum and the halogen-containing onium salt. In Comparative Example 1, on the other hand, the molecular weight of the polyether compound was not increased since an organoaluminum and a non-halogen-containing onium salt were not used.

### Industrial Applicability

The polyether compound according to one embodiment of the present invention is blended in a lubricating oil composition used in a refrigerator, an internal-combustion engine, a gear system, a bearing system, a transmission system, a shock absorber, and the like, and used, for example, as a viscosity index improver. The polyether compound can also be used as a raw material for urethane constituting an adhesive, a sealant, and the like.

## Claims

1. A polyether compound having a halogen atom content of 0.1000% by mass or less in terms of a polymer molecule thereof as measured by combustion ion chromatography and a weight average molecular weight (Mw) of 140,000 or more and 1,000,000 or less.

2. The polyether compound according to claim 1, wherein the polyether compound is represented by the following general formula (1): 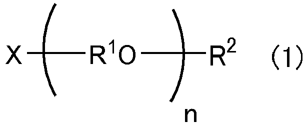 wherein in the general formula (1), X represents a halogen atom; R¹O represents a constitutional unit derived from an oxirane monomer; R² represents a hydrogen atom, a hydrocarbon group having a number of carbon atoms of 1 or more and 10 or less, or an oxygen-containing hydrocarbon group having a number of carbon atoms of 1 or more and 10 or less; and
n represents such an integer that the polyether compound has a weight average molecular weight (Mw) of 140,000 or more and 1,000,000 or less,
provided that plural R^{1'}s may be the same as or different from each other.

3. The polyether compound according to claim 1 or 2, wherein the polyether compound is represented by the following general formula (2): 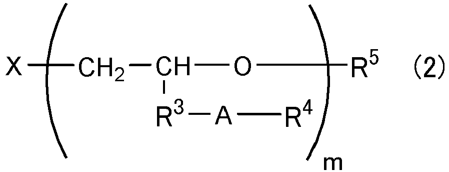 wherein in the general formula (2), X represents a halogen atom; R³ represents a single bond or a methylene group; R⁴ represents a hydrogen atom, a chlorine atom, or an alkyl group having a number of carbon atoms of 1 or more and 24 or less; R⁵ represents a hydrogen atom, a hydrocarbon group having a number of carbon atoms of 1 or more and 10 or less, or an oxygen-containing hydrocarbon group having a number of carbon atoms of 1 or more and 10 or less; A represents a single bond or an oxygen atom; and m represents such an integer that the polyether compound has a weight average molecular weight (Mw) of 140,000 or more and 1,000,000 or less,
provided that plural R^{3'}s may be the same as or different from each other, the plural R^{4'}s may be the same as or different from each other, and the plural A's may be the same as or different from each other.

4. The polyether compound according to any one of claims 1 to 3, wherein the polyether compound has a weight average molecular weight (Mw) of 160,000 or more and 1,000,000 or less.

5. The polyether compound according to any one of claims 1 to 4, wherein the polyether compound has a halogen atom only at a molecular end thereof.

6. The polyether compound according to claim 2, wherein the oxirane monomer is at least one selected from the group consisting of ethylene oxide, propylene oxide, 1,2-epoxybutane, 1,2-epoxyisobutane, and 2,3-epoxybutane.

7. The polyether compound according to any one of claims 1 to 6, wherein the polyether compound has a molecular weight distribution (Mw/Mn) of 10.0 or less.

8. A viscosity index improver comprising the polyether compound according to any one of claims 1 to 7.

9. A lubricating oil composition comprising the polyether compound according to any one of claims 1 to 7, and a lubricant base oil.

10. A production method for a polyether compound, comprising polymerizing an oxirane monomer with a halogen-containing onium salt and a trialkylaluminum to thereby produce a polyether compound having a halogen atom content of 0.1000% by mass or less in terms of a polymer molecule thereof as measured by combustion ion chromatography and a weight average molecular weight (Mw) of 140,000 or more and 1,000,000 or less.

11. The production method for a polyether compound according to claim 10, wherein the halogen-containing onium salt is a compound represented by the following general formula (3): 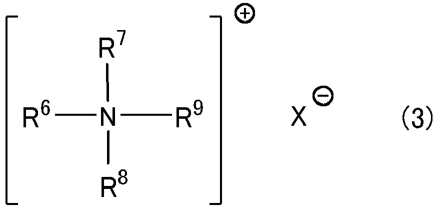 wherein in the general formula (3), X represents a halogen atom; and R⁶ to R⁹ each independently represent an alkyl group having a number of carbon atoms of 1 or more and 8 or less.

12. The production method for a polyether compound according to claim 10 or 11, wherein the oxirane monomer is at least one selected from the group consisting of ethylene oxide, propylene oxide, 1,2-epoxybutane, 1,2-epoxyisobutane, and 2,3-epoxybutane.

13. The production method for a polyether compound according to any one of claims 10 to 12, wherein a saturated hydrocarbon solvent is used as a solvent used in production of the polyether compound.

14. A production method for a polyether compound, comprising polymerizing an oxirane monomer with a halogen-containing onium salt and an organoaluminum to thereby produce a polyether compound having a halogen atom content of 0.1000% by mass or less in terms of a polymer molecule thereof as measured by combustion ion chromatography and a weight average molecular weight (Mw) of 140,000 or more and 1,000,000 or less.
